# EUROPEAN PATENT APPLICATION

(11) **EP 4 717 088 A1**
(43) Date of publication of application: **01.04.2026**
(21) Application number: 24782600.1
(22) Date of filing: 16.07.2024
(51) Int. Cl.: A01N 63/38, A01P 21/00, C05F 11/08

(54) **METHOD FOR IMPROVING THE CULTIVATION OF PLANTS UNDER ABIOTIC STRESS CONDITIONS**

(30) Priority: 01.08.2023 ES 202330671
(71) Applicant: Timac Agro España, S.A., 31160 Orcoyen, Navarra (ES)
(72) Inventor: LÓPEZ SERRANO, Lidia, 29010 Málaga (ES); FÉREZ GÓMEZ, Alberto, 29010 Málaga (ES); POZUETA ROMERO, Javier, 29010 Málaga (ES); MORCILLO, Rafael Jorge León, 29010 Málaga (ES)
(74) Representative: Garrigues IP, S.L.P.
(86) International application number: PCT/ES2024/070453
(87) International publication number: WO 2025/027218

(57) **Abstract**

The present invention falls within the technical field of agricultural exploitation under abiotic stress conditions and describes a method intended to improve the yield and effectiveness of plant cultivation that combines the application of a biostimulant product on the aerial parts of the plant and the selection of a certain biostimulant product based on a cell-free filtrate of fungal origin obtained from the fungi culture of the genus *Trichoderma.* The aim of this method is to reverse or avoid the alteration of the expression of genes related to primary metabolism of carbohydrates, lipids and amino acids, and secondary metabolism, hormone production and signalling, RNA synthesis and processing, protein synthesis, modification and stabilisation, solute and nutrient transport and the structure of the cell wall in plants.

## Description

### Field of the invention

The present invention falls within the field of metabolomics. Specifically, it relates to methods intended to improve plant cultivation under abiotic stress conditions via the application of biostimulant compositions to the aerial parts of the plants.

### Background

Drought and salination caused by global warming are, by far, the main environmental stress factors in agriculture that limit the overall productivity of major crops by directly reducing the potential yield of plants, but also by indirectly influencing their interactions with biotic factors that play a fundamental role in global food security. The predicted climate changes will have adverse effects on crop yields and functionality, mainly in cereals (rice, wheat and corn), tomato, sunflower and cotton_{1,2}. In the Mediterranean countries of southern Europe, drought and salination are expected to severely reduce the yield and quality of important horticultural species such as tomato. This reduction will be especially serious in Spain, which is one of the largest tomato producers in the world. In addition to the problems derived from global warming caused by human action, the environmental damage inflicted by practices based on the depletion of soil and water resources and the intensive application of nitrogen- and phosphate-based fertilisers has become a major limitation of conventional agriculture. Therefore, it is imperative to establish strategies for sustainable and environmentally-friendly agriculture intended to improve crop yields, tolerance to drought and salinity and efficient water and nutrient use, while reducing the negative impact of agrochemicals on the environment. In the last ten years, evidence gathering has shown that many of these aims can be achieved through the use of biostimulants, which are defined as any substance or microorganism applied to plants that stimulates natural processes to improve nutrient efficiency, tolerance to abiotic stress and/or quality traits of the crop, regardless of its nutrient contents.

Plants are not axenic organisms but metaorganisms that host a complex and dynamic microbial consortium of bacteria, fungi, archaea and protists that communicate with plants by exchanging chemical signals throughout the phytosphere. These symbiotic interactions are important not only for productivity, quality and suitability of the plants, but also for the functioning of terrestrial ecosystems_{4,5,6}. Therefore, understanding the relationships between plant growth and soil microbial populations is necessary when seeking new and efficient agricultural and ecological intensification strategies to improve yield and tolerance to abiotic and biotic stresses. A common practice, which is safe and environmentally friendly to increase crop yields and/or protect plants from abiotic stress and pests, while reducing the use of agrochemicals, is based on the inoculation of the soil with plant growth-promoting microorganisms that act as biostimulants_{7,8,9,10,11}.

US patent US8716001B2 describes a method for enhancing plant growth that comprises contacting a strain of *Trichoderma* with the plant in effective conditions so that the strain of *Trichoderma* colonises the roots of the plant, thus creating a plant-*Trichoderma* system. The patent describes methods for improving the resistance of plants to abiotic stress, increasing the efficiency of nitrogen use in plants, reducing nitrous oxide emissions into the air, reducing the leaching of nitrates into the soil and water and improve carbon sequestration from the air.

US patent application US2020275618 also describes a plant system that promotes plant resistance to abiotic stress growing conditions comprising a plurality of plants in a substrate; a mycorrhizal fungal community in the substrate arranged to form a biological interface with the roots of the plants that allows an exchange of chemical substances between the fungus and the plurality of plants; and at least one sensor that interacts with said mycorrhizal fungal community and is configured to collect sensory information about a physiological condition and a phenotypic state of said plurality of plants.

US patent US11118159 relates to the desert endophytic bacterium SA187 that can provide resistance or tolerance to abiotic stress conditions to seeds or plants. Compositions containing SA187 can be used to improve plant development and yield under environmental stress conditions.

Although microbial products have enormous potential to contribute to economic growth and sustainable development in agriculture, many challenges limit the widespread adoption of this technology around the world. The limitations in its application are usually related to the difference in effectiveness of microbial products from controlled conditions either in the laboratory or greenhouse, to field conditions₁₂. It is even possible that the effectiveness of a microbial product varies depending on the type of soil, cultivation or surroundings used, limiting wider adoption by farmers₁₃. The effectiveness of the product may even be compromised because the indigenous microbial communities associated with a plant or the soil may surpass the inoculated microbes, causing the latter to disappear in a matter of weeks or persist at low and ineffective levels₁₄.

Other factors, such as extreme weather conditions, soil characteristics and the presence of environmental or soil contaminants can also decrease the effectiveness of a strain relative to the effectiveness of the same strain under controlled conditions.

Additionally, other practical problems with the use of microbial inoculants are incompatibility with agrochemicals or with the farmer's equipment and production practices. Lastly, the storage and transportation problems of products of this type are also notable, in addition to the corresponding practical difficulties in implementing its use in developing regions, both due to lack of scientific knowledge and lack of awareness₁₅.

Beneficial microorganisms applied directly to the soil emit diffusible substances including phytohormones, carbohydrates, proteins, fatty acids, flavonols, organic acids, amino acids and volatile compounds that promote root branching and nutrient absorption, improve photosynthesis, alter the metabolism, confer resistance to abiotic and pathogenic stresses_{16,17}, and stimulate beneficial microbial communities residing in the soil and phytosphere_{18,19,20,21,22}, thus promoting plant growth and yield. Agronomic studies have consistently shown that application to the soil of cell-free culture filtrates (CF) of beneficial plant-associated microbes improves seed germination, seedling growth and crop yield_{23,24,11}.

The authors of the present invention have previously demonstrated that the application to the soil of cell-free filtrates of the beneficial fungus *Trichoderma harzianum* and fungal phytopathogens (for example, *Alternaria alternata* and *Penicillium aurantiogriseum)* promotes root growth and improves the yield of pepper plants grown under optimal irrigation conditions₂₅. Therefore, cell-free filtrates of beneficial and phytopathogenic fungi can be used as biostimulants to improve crop yield, as described in international patent application WO 2011/135121 A2. Compositional analyses of these cell-free fungal filtrates revealed the presence of volatile organic compounds (VOCs), some of which have been shown to promote plant growth.

Thus, the present invention proposes a solution to the technical problems identified above, especially with respect to methods for improving the yield and efficiency of plant cultivation under abiotic stress conditions, in particular high salinity and/or water scarcity. This solution is based on a method that combines two essential technical features such as the application of a biostimulant product on the aerial parts of the plant and the selection of the specific biostimulant product as a cell-free filtrate obtained from the culture of fungi belonging to the genus *Trichoderma.*

### Description of the invention

In one aspect, the present invention provides a method for improving the yield of plant cultivation under abiotic stress conditions; that is, a method for increasing the tolerance of plants to abiotic stress that comprises: growing a plant in a plant substrate in the presence of nutrients; and applying an effective amount of a biostimulant composition or product on the aerial parts of the plant, also referred to herein as "CF biostimulant composition or product", to provide the plant with resistance to abiotic stress, wherein the CF biostimulant composition or product according to the present invention comprises a cell-free culture filtrate of one or more fungi of the genus *Trichoderma.*

In an additional aspect, the invention relates to the previous method, wherein the cell-free culture filtrate of one or more fungi of the genus *Trichoderma* comprises one or more volatile organic compounds emitted to the culture medium by the microorganism(s), wherein the volatile organic compounds are selected from the group comprising: ethanol, 1-propanol, 1-propanol,2-methyl, 1-butanol-3-methyl, 1-butanol,2-methyl, 3-methyl-1-pentanol, 1-butanol,3-methyl-,acetate, 1-butanol,2-methyl-,acetate, 2-heptanol, 2-nonanol, 2-undecanol, benzaldehyde-2-methyl, 2,4-dimethyl-1-heptene, toluene, 2-phenylethyl alcohol, phenol,4-ethyl, 2-acetyl-3methylthiophene, benzene-1,3-bis(1,1-dimethylethyl), 2,5-di-tert-butyl-1,4-benzoquinone, ethyl acetate, acetic acid, propenoic acid ethyl ester, isobutyl acetate, butanoic acid, ethyl ester, butanoic acid, 2-methyl-ethyl ester, 2-pentanone, 2-heptanone, butyrolactone, 2-heptanone-4-methyl, 2-heptanone-4,6-dimethyl, 2-nonanone, (+)-isomenthol, citronellol, citral, cis-beta-farnesene, beta-humulene, alpha-bisabolol, beta-selinene, alpha-gurjunene and alpha-cedrene. In another aspect of the invention, the method as defined above is characterised in that the biostimulant composition comprises a cell-free filtrate from the culture of microorganisms of the genus *Trichoderma* comprising one or more of: *Trichoderma afroharzianum, Trichoderma asperelloides* (strain T203), *Trichoderma asperellum* (strain T-203), *Trichoderma atroviride* (strains IMI 206040, MUCL 45632, *P1), Trichoderma ghanense, Trichoderma hamatum* (strains DIS 219b, GD12), *Trichoderma harzanium* (strains 1295-22, ALL-42, AK20G, CECT2413, GT3-2, NF-9, OTPB3, T-1, T- 22, T-39, T-203), Trichoderma longibrachiatum, *Trichoderma parareesei, Trichoderma virens (strains G-6, G-6-5, G-11,* PDBCTVs 12, PDBCTVs 13, T3,Tv29.8, *Δppt1), Trichoderma viridae (strain* T-67, TV 97) and/or *Trichoderma yunnanense.*

In another aspect of the invention, the application of the biostimulant composition on the aerial parts of the plants comprises covering at least 3%, 5%, 10%, 15%, 20%, 30%, 40%, 50%, 60%, 70%, 80%, 90%, 99% or 100% of the total surface of the aerial parts of the plant with said biostimulant composition.

In another aspect of the invention, it is envisaged that the application of the biostimulant product on the plant is performed on the aerial parts of the plant comprising: stem(s), hypocotyls, cotyledons, leaf(ves), flower(s), fruit(s) and/or seed(s).

In another aspect of the invention as defined in previous paragraphs, applying the biostimulant composition on the aerial parts of the plant comprises: watering, sprinkling, spreading, atomising, spraying, pressurised spraying by nozzle, micro-nozzle or nebulisation.

In another aspect of the invention described above, the application of the biostimulant composition on the aerial parts of the plant is carried out 1-4 times a month. In another aspect of the invention the method for improving yield, for cultivating a plant comprises abiotic stress conditions selected from the group consisting of: cold temperature, freezing, cooling, heat or high temperature, drought, reduction of irrigation provided or water stress, salinity or high electrical conductivity in soil or irrigation water, high light intensity, low light intensity, ozone, high concentration of heavy metals in the soil and/or irrigation water and any combination thereof.

In another aspect of the invention, it is envisaged that the method is applicable in abiotic stress conditions that comprise a combination of stress due to drought and/or salinity.

In another aspect of the invention, it is envisaged that the method defined in previous paragraphs is applicable to plants selected from the group comprising: wheat, rye, oat, buckwheat, chia, flax, rice, corn, potato, sweet potato, tomato, pepper, eggplant, lettuce, lamb's lettuce, endive, curly endive, rocket and other leafy vegetables, courgette, cucumber, cauliflower, broccoli, onion, garlic, carrot, tiger nut, ginger, strawberry, blueberry, raspberry, blackberry, cherry, currant and other red fruits, artichoke, melon, watermelon, pumpkin, green legumes, chickpea, lentil, bean, soybean, cotton, sunflower, tobacco, oregano, thyme, lavender, alfalfa, basil, mint, parsley, peach tree, almond tree, plum tree, nectarine tree, apricot tree and other tree species of agronomic interest of the genus *Prunus* sp., vines, avocado, mango, custard apple, papaya, kiwi, medlars, guava, star fruit, pomegranates, banana tree, mandarin tree, orange tree, lemon tree, grapefruit tree, olive tree, walnut tree, hazelnut tree and/or cashew tree.

Another aspect of the invention envisages that the method defined in previous paragraphs is applicable to a tomato plant of the species *Solanum lycopersicum L.*

Another aspect of the invention envisages how to improve the crop yield of a plant: increasing the number of fruits per plant and/or increasing the weight of total fruits per plant and/or increasing the weight and size of the fruits and/or reducing the amount of water and/or nutrients necessary to obtain the same amount of fruits as in plants cultivated under normal conditions.

It is also an aspect of the present invention that the biostimulant composition used in the method of the invention further comprises other additional active compounds selected from the group consisting of: pesticides, plant hormones, insecticides, bactericides, fungicides, antibiotics, proteins, peptides, amino acids, organic acids and/or carbohydrates and/or an agriculturally-acceptable carrier.

It is also an aspect of the present invention that the method for improving the crop yield of a plant under abiotic stress conditions described in previous paragraphs is applicable to the growth of the plant under field conditions or in a pot in a greenhouse.

A further aspect of the present invention is also a method for reversing or avoiding the alteration of the gene expression related to the primary metabolism of carbohydrates, lipids and amino acids, and secondary metabolism, hormone production and signalling, RNA synthesis and processing, protein synthesis, modification and stabilisation, solute and nutrient transport and the structure of the cell wall in plants subjected to conditions of water stress or drought, wherein said method is characterised in that it comprises, as in the method described in previous paragraphs, growing a plant in a plant substrate in the presence of nutrients; and applying an effective amount of a biostimulant composition or product on the aerial parts of the plant, also referred to herein as "CF biostimulant composition or product", to provide the plant with resistance to abiotic stress, wherein the CF biostimulant composition or product according to the present invention comprises a cell-free culture filtrate of one or more fungi of the genus *Trichoderma.*

And lastly, an object of the present invention is a method as defined in the previous paragraphs for reversing or avoiding the alteration of the expression of the genes DXS2 with SEQ ID. No. 1 and HMGR1 with SEQ ID. No. 2 of plants cultivated under water stress conditions, comprising: growing a plant in a plant substrate in the presence of nutrients; and applying an effective amount of a biostimulant composition or product on the aerial parts of the plant, also referred to herein as "CF biostimulant composition or product", to provide the plant with resistance to abiotic stress, wherein the CF biostimulant composition or product according to the present invention comprises a cell-free culture filtrate of one or more fungi of the genus *Trichoderma.*

### Figures

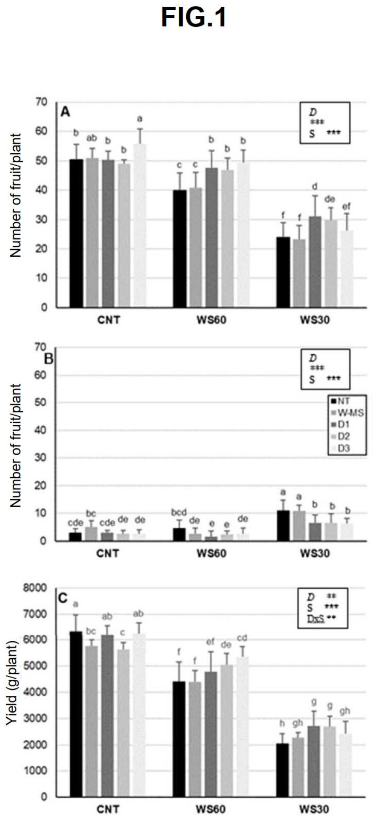

**Figure 1****.** Number of commercial (A) and non-commercial (B) fruits, and total production of commercial fruits (C) of tomato plants grown under CNT irrigation conditions, WS60 and WS30 with or without foliar application of CF biostimulant product at 3 dilutions (D1, D2, D3) of *Trichoderma harzianum.* Plants treated with W-MS and untreated (NT) plants were used as negative controls. Data are the mean of 10 replicates and error bars represent standard deviations. Different letters indicate significant differences at P < 0.05 (LSD test).

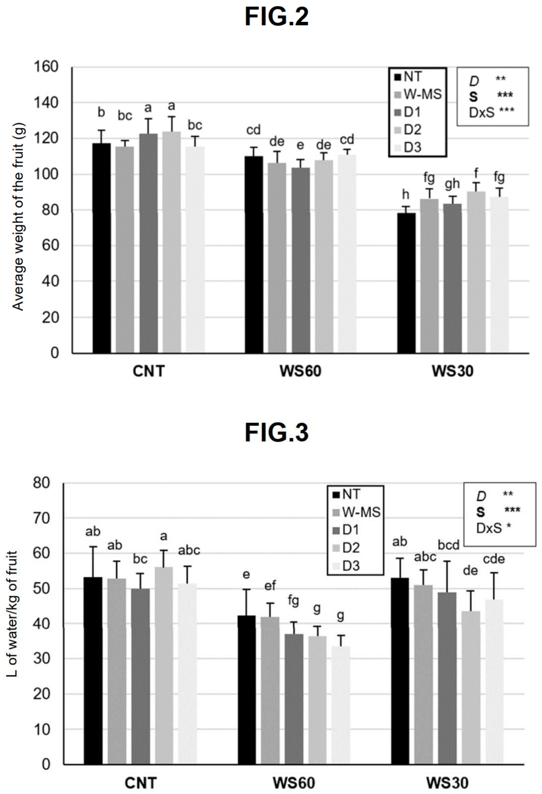

**Figure 2****.** Average weight of the fruit of tomato plants grown under CNT, WS60 and WS30 irrigation conditions with or without foliar application of CF biostimulant product at 3 dilutions (D1, D2, D3) of *Trichoderma harzianum.* Plants treated with W-MS and untreated (NT) plants were used as negative controls. Data are the mean of 10 replicates and error bars represent standard deviations. Different letters indicate significant differences at P < 0.05 (LSD test).
**Figure 3****.** Volume of water necessary to obtain 1 kg of commercial fruits per tomato plant cultivated under CNT, WS60 and WS30 irrigation conditions with or without foliar application of CF biostimulant product at 3 dilutions (D1, D2, D3) of *Trichoderma harzianum.* Plants treated with W-MS and untreated (NT) plants were used as negative controls. Data are the mean of 10 replicates and error bars represent standard deviations. Different letters indicate significant differences at P < 0.05 (LSD test).

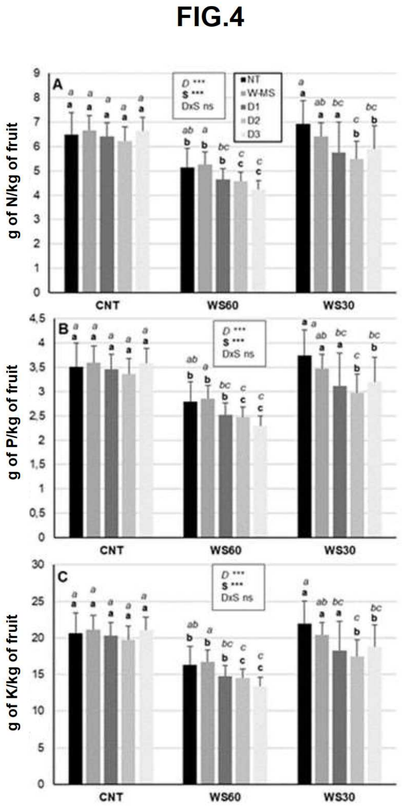

**Figure 4****.** Nitrogen (A), phosphorus (B) and potassium (C) necessary to obtain 1 kg of commercial fruits per tomato plant, cultivated under CNT, WS60 and WS30 irrigation conditions with or without foliar application of CF biostimulant product at 3 dilutions (D1, D2, D3) of *Trichoderma harzianum.* Plants treated with W-MS and untreated (NT) plants were used as negative controls. Data are the mean of 10 replicates and error bars represent standard deviations. Different letters indicate significant differences at P < 0.05 (LSD test).

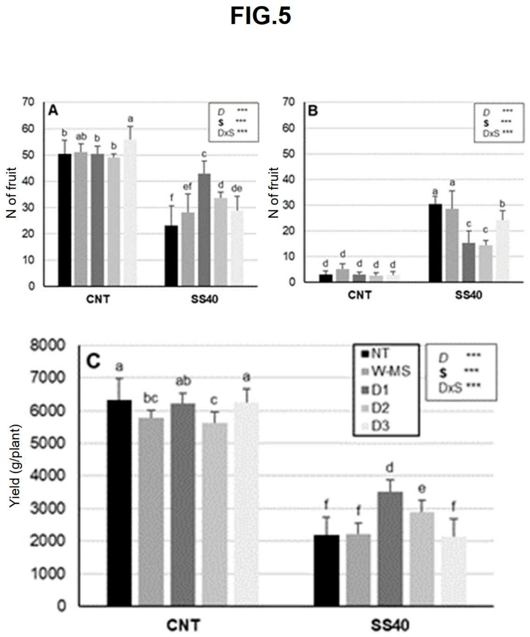

**Figure 5****.** Number of commercial (A) and non-commercial (B) fruits, and total commercial fruit production (C) of tomato plants grown under CNT and SS40 irrigation conditions with or without foliar application of CF biostimulant product at 3 dilutions (D1, D2, D3) of *Trichoderma harzianum.* Plants treated with W-MS and untreated (NT) plants were used as negative controls. Data are the mean of 10 replicates and error bars represent standard deviations. Different letters indicate significant differences at P < 0.05 (LSD test).

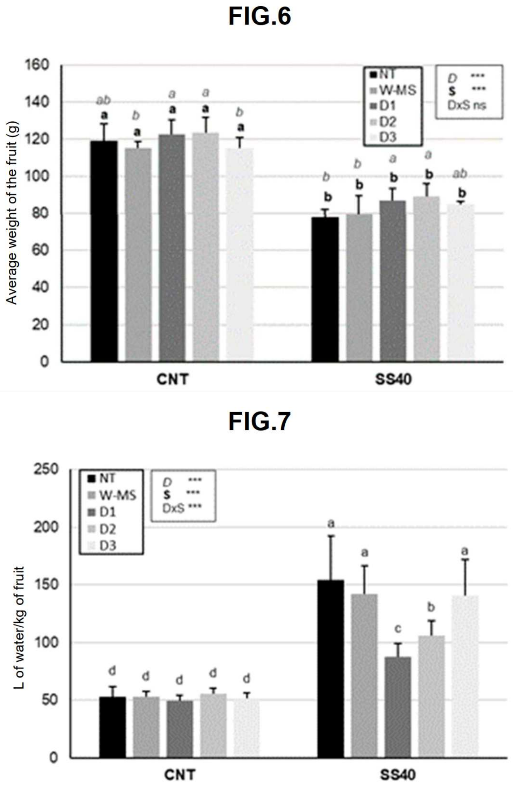

**Figure 6****.** Average weight of fruits of tomato plants cultivated under CNT and SS40 irrigation conditions with or without foliar application of CF biostimulant product at 3 dilutions (D1, D2, D3) of *Trichoderma harzianum.* Plants treated with W-MS and untreated (NT) plants were used as negative controls. Data are the mean of 10 replicates and error bars represent standard deviations. Different letters indicate significant differences at P < 0.05 (LSD test).
**Figure 7****.** Volume of water necessary to obtain 1 kg of commercial fruits per tomato plant cultivated under CNT and SS40 irrigation conditions with or without foliar application of CF biostimulant product at 3 dilutions (D1, D2, D3) of *Trichoderma harzianum.* Plants treated with W-MS and untreated (NT) plants were used as negative controls. Data are the mean of 10 replicates and error bars represent standard deviations. Different letters indicate significant differences at P < 0.05 (LSD test).

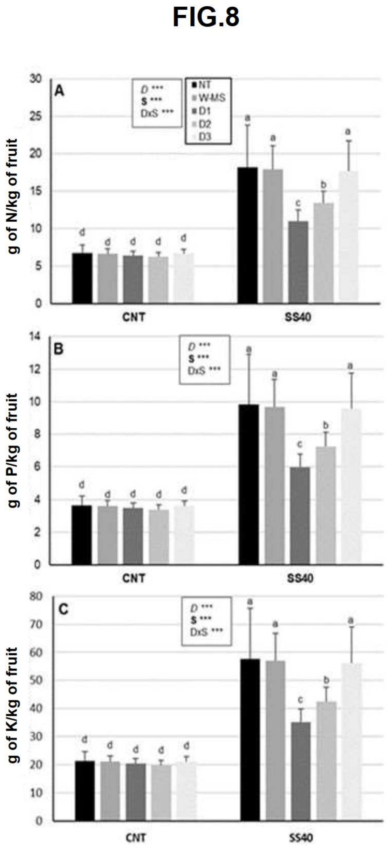

**Figure 8****.** Nitrogen (A), phosphorus (B) and potassium (C) necessary to obtain 1 kg of commercial fruits per tomato plant, cultivated under CNT and SS40 irrigation conditions with or without foliar application of CF biostimulant product at 3 dilutions (D1, D2, D3) of *Trichoderma harzianum.* Plants treated with W-MS and untreated (NT) plants were used as negative controls. Data are the mean of 10 replicates and error bars represent standard deviations. Different letters indicate significant differences at P < 0.05 (LSD test).

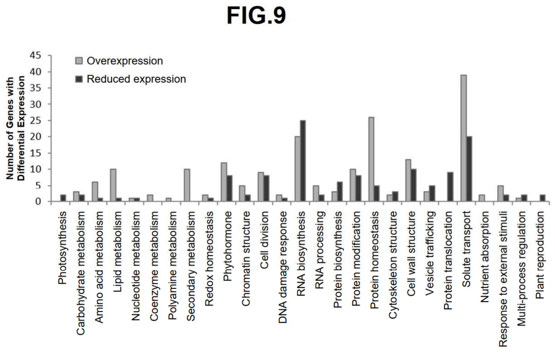

**Figure 9****:** Functional categorisation of the 687 "golden genes" identified by comparing the differences between the transcriptomes of the groups [WS (plants cultivated under water stress conditions) vs. OI (well irrigated plants)] and [WS+CF (plants cultivated under water stress conditions + foliar application of CF biostimulant composition) vs. WS (plants cultivated under water stress conditions)]. The graph shows the number of "golden genes" overexpressed and with reduced expression classified by functional categories according to MAPMAN (https://mapman.gabipd.org/) in the comparison WS+CF vs. WS.

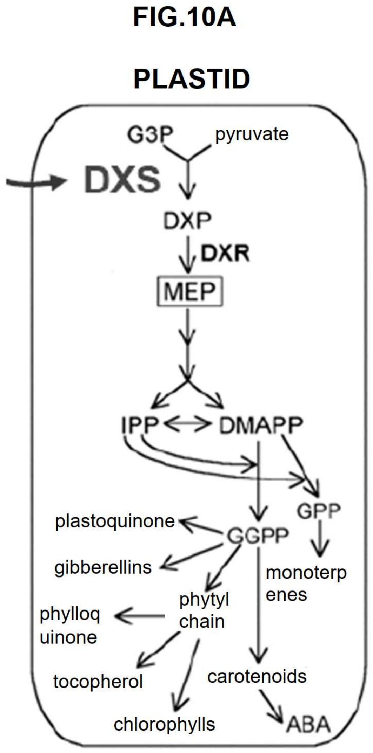

**Figure 10A****:** It represents a diagram of the 2C-methyl-D-erythritol-4-phosphate (MEP) pathway for the synthesis of plastid isoprenoids in the plant.

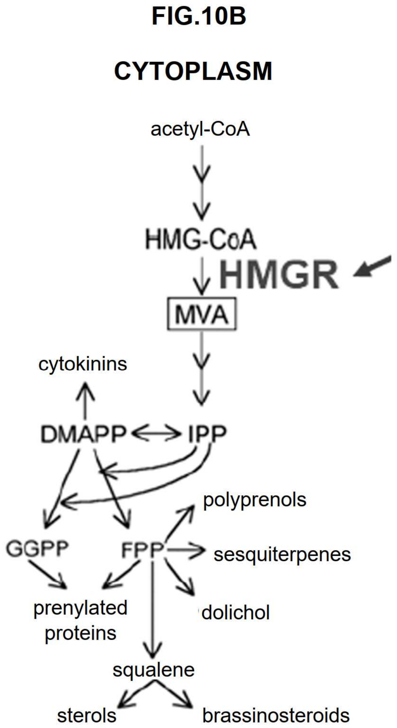

**Figure 10B****:** It represents a diagram of the mevalonic acid (MVA) pathway for the synthesis of cytosolic isoprenoids in the plant.

### Detailed description of the invention

As a result of an intense research process, the inventors of the present invention have designed a method for improving the crop yield of a plant under abiotic stress conditions; that is, a method for increasing the tolerance of plants to abiotic stress and thus reverse the harmful processes that occur in the growth and development of the plant in such circumstances.

As used in this patent application the term "abiotic stress" refers to the effect caused by external non-biological factors, like rain, high or low temperatures, drought, reduction of water supply, wind, salinity, soil problems, chemical products, etc., in other words, external factors, in which the correct development of the plants is prevented, potentially causing detrimental effects on the growth and development yield. Thus, in accordance with the present invention, abiotic stress comprises low temperatures, cold temperature resulting in freezing, cooling, heat or high temperature, drought, reduction of irrigation provided or water stress, salinity or high electrical conductivity in soil or irrigation water, high light intensity, low light intensity, ozone, high concentration of heavy metals in the soil and/or irrigation water and any combination of the aforementioned conditions. These external factors directly affect the metabolism of plants, including photosynthesis, respiration, solute transport, translocation, protein synthesis, nutrient assimilation, tissue differentiation, formation of carbohydrates, lipids, structural substances of plants and in the different phases of crop development, which causes significant yield losses. As is well known, in conditions of water stress, for example, plants react by modulating the transcription and hormone signalling machineries, which allows them to make metabolic adjustments to deal with low water availability. Biochemical and cellular mechanisms such as water/ion uptake and transport, redox homeostasis, the removal of reactive oxygen species (ROS), osmoregulation and membrane protection are accompanied by physiological responses such as the regulation of the opening of the stomata, the development of roots and the protection of the photosynthesis machinery, which translates among others into a reduction in the chlorophyll and carotenoid content of the plants.

According to the results of the experimental work carried out by the authors of the present invention, the foliar application of the CF biostimulant composition as defined in the present invention is capable of avoiding the alteration of the expression of numerous genes or "reversing" the expression thereof when the plant is subjected to water stress, in such a way that it contributes positively to mitigating the deficiencies developed in the plant during its cultivation in such conditions.

The researchers of the present invention have determined that foliar application of the CF biostimulant composition of the invention on plants suffering from water stress largely avoids the alteration of gene expression caused by water stress. Such genes are related to primary metabolism (carbohydrates, lipids and amino acids) and secondary metabolism, hormone production and signalling, RNA synthesis and processing, protein synthesis, modification and stabilisation, solute and nutrient transport, the structure of the cell wall, etc. (Figure 9). Specifically, it has been possible to confirm that the DXS2 and HMGR1 genes with SEQ ID No. 1 and SEQ. ID No. 2, respectively, are not differentially expressed after the application of the CF biostimulant composition when the plant is cultivated under optimal irrigation conditions. However, its expression is negatively affected when the plant is subjected to water stress or "suboptimal" irrigation conditions. The negative effect of drought on the expression of these genes is largely avoided by the foliar application of the CF biostimulant composition. These two genes are essential for the plant to carry out vital growth functions.

In the plant, plastid isoprenoids such as photosynthetic pigments, (e.g. chlorophylls and carotenoids), tocopherols, gibberellins, abscisic acid, cytokinins, plastoquinones, etc. are metabolites involved in basic functions such as respiration and photosynthesis, cell division, photoprotection, nutrient uptake, etc. and are synthesised via the 2C-methyl-D-erythritol-4-phosphate (MEP) pathway. The DXS2 gene with SEQ ID. No.1 catalyses the step that limits the metabolic flux via the MEP pathway, thereby limiting the functioning of the MEP pathway for the synthesis of these essential metabolites. (Figure 10A). The expression of this gene (SEQ ID No. 1) is regulated by transcriptional and post-transcriptional mechanisms.

Moreover, the production of cytosolic isoprenoids in the plant, such as sterols, brassinosteroids, polyprenols, triterpenes, cytokinins, etc, are synthesised via the mevalonic acid (MVA) pathway. The HMGR1 gene with SEQ ID No. 2 catalyses the step limiting the metabolic flux towards the mevalonate (MVA) pathway and therefore, the production of cytosolic isoprenoids. (Figure 10B). The HMGR1 gene with SEQ ID No. 2 is therefore an important determinant of plant growth and its expression is also transcriptionally regulated.

The authors of the present invention have been able to verify that the application of the CF biostimulant composition on plants grown under conditions of water stress avoids the reduction of the expression of the aforementioned genes, DXS2 with SEQ ID No.1, and HMGR1 with SEQ ID No. 2 induced by drought, in such a way that the effect produced by the CF biostimulant composition reverses the effect produced by drought and thus increases photosynthesis, growth and yield of plants grown under such conditions.

The method of the invention can be applied both in field conditions and in a pot in a greenhouse.

Therefore, the invention is intended for improving the crop yield of horticultural plants and woody plants. Non-limiting examples of horticultural and woody plants that can benefit from the method of the present invention are: wheat, rye, oat, buckwheat, chia, flax, rice, corn, potato, sweet potato, tomato, pepper, eggplant, lettuce and other leafy vegetables, courgette, cucumber, cauliflower, broccoli, onion, garlic, carrot, tiger nut, ginger, strawberry, and other red fruits, artichoke, melon, watermelon, pumpkin, green legumes, chickpea, lentil, bean, soybean, cotton, sunflower, tobacco, oregano, thyme, lavender, alfalfa, basil, mint, parsley, peach tree and other tree species of agronomic interest of the genus *Prunus sp.,* vines, avocado, mango, custard apple, papaya, kiwi, medlars, guava, star fruit, pomegranates, banana tree, mandarin tree, orange tree, lemon tree, grapefruit tree, olive tree, walnut tree, hazelnut tree and/or cashew tree. Preferably, the method of the present invention is intended to improve the yield of tomato plants of the species *Solanum lycopersicum L.*

As defined above, the method of the present invention aims to improve the crop yield of plants and as such comprises increasing the number of fruits per plant and/or increasing the total weight of fruits per plant and/or increasing the weight and size of the fruits and/or reducing the amount of water and nutrients necessary to obtain a certain number of fruits. Such improvements may be determined in comparison with the crop yield in the same plants without them being subjected to the method of the present invention, which comprises growing a plant in a plant substrate in the presence of the nutrients necessary for the growth and development of the plant, and applying an effective amount of a biostimulant composition on the aerial parts of the plant, wherein the biostimulant composition comprises a cell-free culture filtrate of one or more fungi of the genus *Trichoderma.*

Therefore, the method of the present invention is mainly characterised by growing a plant and applying an effective amount of a biostimulant composition on the aerial parts of said plant during its growth.

Said composition, referred to as CF biostimulant composition, is characterised by being the result of growing a microorganism of the genus *Trichoderma* in an appropriate culture medium and removing this microorganism from the culture medium when the growth of the microorganism has begun the logarithmic growth phase and thus obtain the composition free of microorganisms, in other words, free of cells or particles of microorganisms.

For the purposes of the present invention, the use of a composition resulting from the previous method is envisaged, using one or more of the following species and strains of the genus *Trichoderma: Trichoderma afroharzianum, Trichoderma asperelloides* (strain T203), *Trichoderma asperellum* (strain T-203), *Trichoderma atroviride* (strains IMI 206040, MUCL 45632, P1), *Trichoderma ghanense, Trichoderma hamatum* (strains DIS 219b, GD12), *Trichoderma harzanium* (strains 1295-22, ALL-42, AK20G, CECT2413, GT3-2, NF-9, OTPB3, T-1, T-22, T-39, T-203), *Trichoderma longibrachiatum, Trichoderma parareesei, Trichoderma virens* (strains G-6, G-6-5, G-11, PDBCTVs 12, PDBCTVs 13, T3, Tv29.8, Δppt1), *Trichoderma viridae* (strain T-67, TV 97) and/or *Trichoderma yunnanense.*

Therefore, preferably, the use of *Trichoderma harzanium* strain CECT2413 is envisaged, the use of CF biostimulant compositions obtainable from the aforementioned strain and described in patent application WO2017174503 being preferable.

Said CF composition is also characterised by not containing cells, in other words, being free of any cells and containing parts per billion of one or more volatile organic compound emitted to the culture medium by the microorganism(s) of the genus *Trichoderma,* wherein the volatile organic compounds are selected from the group comprising: ethanol, 1-propanol, 1-propanol,2-methyl, 1-butanol-3-methyl, 1-butanol,2-methyl, 3-methyl-1-pentanol, 1-butanol,3-methyl-,acetate, 1-butanol,2-methyl-,acetate, 2-heptanol, 2-nonanol, 2-undecanol, benzaldehyde-2-methyl, 2,4-dimethyl-1-heptene, toluene, 2-phenylethyl alcohol, phenol,4-ethyl, 2-acetyl-3methylthiophene, benzene-1,3-bis(1,1-dimethylethyl), 2,5-di-*tert*-butyl-1,4-benzoquinone, ethyl acetate, acetic acid, propenoic acid ethyl ester, isobutyl acetate, butanoic acid, ethyl ester, butanoic acid, 2-methyl-ethyl ester, 2-pentanone, 2-heptanone, butyrolactone, 2-heptanone-4-methyl, 2-heptanone-4,6-dimethyl, 2-nonanone, (+)-isomenthol, citronellol, citral, cis-beta-farnesene, beta-humulene, alpha-bisabolol, beta-selinene, alpha-gurjunene and alpha-cedrene. Said composition can be used directly or diluted in the ratios 1:2; 1:4; 1:6; 1:8; 1:9 on the aerial parts of the plant.

Optionally, said composition can be part of a biostimulant product and may also contain other active ingredients such as: pesticides, plant hormones, insecticides, bactericides, fungicides, antibiotics, proteins, peptides, amino acids, organic acids and/or carbohydrates, commonly known and used in agriculture by those skilled in the art.

Lastly, it can also contain any of the agriculturally acceptable carriers and well known to those skilled in the art. Examples of agriculturally acceptable carriers include, but are not limited to, adjuvants, diluents, surfactants, conditioning agents, antifreeze, antifoaming agents, thickeners, wetting agents, spreading agents, dispersing agents, emulsifying agents, antimicrobial agents and the like. The agricultural compositions or products must present a form acceptable for application on the aerial parts of the plant, so they can be in the form of particulate solids, solutions, dispersions, suspensions or emulsions.

One of the most relevant features of the present invention is that to achieve the effects of yield improvement, the composition described above must be applied on the areas of the plant to be treated.

For these purposes, the aerial part of the plant is understood as the stems, hypocotyls, cotyledons, leaves, flowers, fruits and/or seeds. In order for the application of the composition to be effective for the purposes of improving the crop yield of the plant, the application must cover at least 3% of the total surface of the aerial parts of the plant, in other words, it must cover at least 5%, 10%, 15%, 20%, 30%, 40%, 50%, 60%, 70%, 80%, 90%, 99% or 100% of said total surface area of the aerial part of the plant being treated. The way in which the composition is applied to the aerial part of the plant is carried out through watering, sprinkling, spreading, atomising, spraying, pressurised spraying by nozzle, micro-nozzle or nebulisation. There is no limitation as to how many times the composition must be applied to the aerial part of the plant during its cultivation to improve the crop yield of the plant, although the application is envisaged between 1 to 6 times a month, preferably 1 to 4 times a month, more preferably 2 to 3 times a month.

Unlike the existing proposals on the market that are based on the application of various types of treatments on the seeds to produce, above all, an increase in germination vigour, that is, the percentage and speed of germination, in this case, the treatment is applied in a certain phase of growth once the different phases of germination have been completed, and that visually coincides mostly from the formation of 2 to 4 true leaves until fruiting, when the method of the invention is applied to horticultural plants, and during any time of the year when in relation to woody plants.

The beneficial effects of the method of the invention in abiotic stress conditions due to reduced water supply translate into a substantial improvement in the crop yield of the plants. Specifically, with the method of the invention, an increase in the total number of commercial fruits per plant is achieved compared to plants not treated with the method according to the invention. Said increase, as demonstrated in the experiment section that follows, reaches at least 13%, preferably between 15% and 30%, for example, 16% or 17%, or even higher than 30%, for example 32%.

Also under abiotic stress conditions due to reduced water supply, the method of the present invention can translate into an increase in the total number of commercial fruits, as demonstrated in the experiment section where said increase is at least 15%, preferably between 20% and 30%, specifically, 21%, 24% or 26%.

In the same manner, the yield of plant cultivation in conditions of reduced water supply can be measured through an increase in the average weight of the fruits, where as shown below, there is a 7% increase in the average weight of the fruits in the treated plant. Additionally, the improvement in the crop yield of plants can be achieved through a reduction in the water necessary to obtain a kilo of commercial fruits. In other words, under normal conditions such as reduced water intake, the plant treated with the method of the invention requires a substantially lower amount of water to produce a kilo of fruits compared to untreated plants. Thus, the water reduction necessary to produce a kilo of fruit is at least 10%, preferably between 20% and 30% and even at values greater than 30%, such as 34% or 35%. Similarly, the treated plants, both in normal and drought conditions achieve better efficiency in nutrient, nitrogen (N), phosphorus (P) and potassium (K) use, reaching the same efficiency values as those achieved in the case of reducing water input. The beneficial effects of the method of the invention under salt stress conditions translate into a substantial improvement in the crop yield of the plants. Specifically, with the method of the invention, an increase in the total number of commercial fruits per plant is achieved compared to plants not treated with the method according to the invention. Said increase, as demonstrated in the experiment section that follows, reaches at least 30%, preferably at least 60%. Therefore, under salt stress conditions, the losses of non-commercial fruit were much lower than untreated plants, only reaching losses of non-commercial fruit at values not exceeding 30% compared to values exceeding 40% in plants grown under normal conditions. Regarding the total yield of commercial fruit, losses in treated plants were less than 48% compared to untreated plants where losses can be quantified as at least 60%. The average weight of the fruits in treated plants under salt stress conditions reflects an increase in the average weight of the fruits of more than 11% compared to plants grown under the same conditions and not treated. In the same manner, the reduction of water and NPK necessary to produce the same amount of fruit is estimated at values of up to 41% and 28% as illustrated in the practical examples of the invention.

### Examples:

### Example 1: Foliar application of a cell-free filtrate based on Trichoderma harzianum CECT2413 to tomato plants Solanum lycopersicum L. under abiotic stress conditions

The research was carried out at the facilities of the "Institute for Mediterranean and Subtropical Horticulture" (IHSM), located in Algarrobo (Malaga) in an 800-gauge plastic multi-tunnel greenhouse. At the 6-8 true leaf stage, tomato plants of the Macizo F1 variety were transplanted into 17 L pots with a mixture of peat: coconut fibre: vermiculite (45:45:10). After the transplant, the plants were watered with a nutrient solution containing the macronutrients NO3- (1.27 mM), NH3 (3.52 mM), CaO (2.31 mM), MgO (0.74 mM), P2O5 (0.48 mM), K2O (2.16 mM) and SO3 (1.11 mM). With regards to the micronutrients, the nutrient solution contained B (23.12 µM), Cu (2.36 µM), Fe (67.15 µM), Mn (36.40 µM), Mo (1.042 µM) and Zn (3.82 µM). The electrical conductivity (EC) was 1.5 dS m⁻¹ and the pH was 6.73. Fifteen days after the transplant, the tomato plants were subjected to two types of abiotic stress that were maintained until the end of the experiment.
(i) 40 mM (SS40) sodium chloride (NaCl) and
(ii) reduction up to 60% (WS60) and 30% (WS30) of the volume of water used for 100% watering.

Plants without NaCl treatment or reduction in water content were used as control (CNT). The electrical conductivity of irrigation water SS40 was 5.78 dS m⁻¹ and the pH was 6.63. Ten plants were established per stress condition and cell-free (CF) fungal treatment. The fungal species that was used to obtain the cell-free (CF) biostimulant composition used in the test on the yield and quality of the fruit of tomato plants grown under stress conditions due to reduced water supply and salinity was *Thrichoderma harzianum* (TH; CECT code 2413).

### Obtaining CF biostimulant composition

To obtain the biostimulant composition based on fungal cultures of *Thrichoderma harzianum* (TH; CECT code 2413), the fungi were first grown in Petri dishes containing 0.22% (w/v) Murashige & Skoog solid basal medium with vitamins (PhytoTech, code number M519; MS), 3% (w/v) D-sucrose (PanReac AppliChem, code number A3925) and 0.8% (w/v) plant agar (Duchefa Biochemie, code number P1001), pH adjusted to 5.74 and sterilised. Cultures were maintained at 28 °C for 7 days under dark conditions. Next, the colonies were transferred to 500 ml Erlenmeyer flasks, containing 200 ml of sterile liquid culture medium (0.22% w/v MS and 3% w/v D-sucrose). These cultures were kept in a stirrer for 7 days at 150 rpm and 28 °C in the dark and were transferred to 2 L Erlenmeyer flasks, containing 900 ml of liquid culture medium. The cultures were placed in a stirrer and incubated at 28°C under continuous stirring (150 rpm) for 3 days in the dark, after which the fungal mycelium was eliminated using Whatman No. 1 filter paper. The resulting filtrate was sterilised using a 0.22 µm Millipore membrane filter and stored at 4 °C pending subsequent use.

### Foliar application of the biostimulant products

The fungal CF biostimulant products were sprayed on the leaves of the plants with three different dilutions in water: undiluted, 1:2 dilution and 1:4 dilution (D1, D2 and D3, respectively). Untreated plants (NT) and plants treated with a MS-based culture medium (W-MS) were used as controls. W-MS contained a 1:6 dilution of MS and 0.036 g/l of D(+)-glucose (Carlo Erba, code number 454337) and D(-)-fructose (VWR, code number 103674Y). The applications were carried out in four different phases:
i) 2-4 true leaves;
ii) after transplant;
iii) during flowering; and
iv) during the fruiting season.

### Results

Foliar application of CF fungal biostimulant products or compositions *Trichoderma* increases fruit production in plants grown under conditions of reduced water supply. Figures 1-3 show the fruit production parameters of plants treated and not treated with CF biostimulant products or compositions of *T. harzianum* grown under mild and severe stress conditions due to reduced water supply (WS60 and WS30, respectively). Statistically significant differences were found in both the type of stress and the application. In plants grown under the WS60 light watering regime, foliar application of D1, D2 and D3 increased the total number of commercial fruits per plant by approximately 16, 13 and 17%, respectively, compared to the NT and W-MS control treatments (Fig. 1A). Furthermore, the foliar application of D2 and D3 increased the total production of commercial fruits by 15 and 21%, respectively, compared to the NT and W-MS treatments (Fig. 1C). In CNT conditions, plants treated with D1 and D2 increased the average fruit weight by 7% compared to the NT and W-MS combinations (Fig. 2). Regarding the volume of water necessary to obtain 1 kg of commercial fruits, it is worth highlighting the significant reduction when applying D2 and D3 compared to NT and W-MS under WS60 conditions (13% and 20% reduction, respectively) and compared to D2 and D3 CNT conditions (35% and 34% reduction, respectively) (Fig. 3); such changes were reflected in a better efficiency of NPK nutrient use (Fig. 4). In plants grown under the WS30 watering regime, foliar application of D1 and D2 increased the total number of commercial fruits by 32% and 26%, respectively, compared to the NT and W-MS control treatments (Fig. 1A). In plants grown under the WS60 watering regime, foliar application of D1, D2 and D3 increased the total number of commercial fruits by 12%, 15% and 20% respectively. Furthermore, treatments with WS30 increased the total commercial yield by 26% and 24% respectively, compared to the NT and W-MS control treatments (Fig. 1C). The foliar application of D1 and D2 reduced the number of non-commercial fruits by 40% (Fig. 1B).

Foliar application of fungal CF biostimulant products increased fruit production in plants grown under salt stress conditions. The production parameters of the plants grown under SS40 conditions are presented in Figures 5-8. Regarding the number of commercial fruits, plants treated with D1- and D2 produced 67% and 31% more commercial fruits than plants treated with NT and W-MS (negative controls under the same stress conditions), respectively (Fig. 5A). Losses in plants treated with D1- and D2 (15% and 31%, respectively) were significantly lower than in the NT and W-MS controls (54% and 45%, respectively) compared to plants not subjected to stress (Fig. 5A). Regarding the total yield of commercial fruit, losses in plants treated with D1- and D2-(43% and 48%, respectively) were lower than in the NT and W-MS plants (65% and 61%, respectively) with respect to non-stressed plants (Fig. 5C). The positive results in the D1 and D2 dilutions were also reflected in an increase in the average weight of the fruits compared to NT and W-MS under SS40 of up to 11% and 13%, respectively (Fig. 6), as well as a reduction in the water and NPK necessary to produce the same amount of fruit of up to 41% and 28% (Figs. 7 and 8). Accordingly, under salt stress, the ability to reduce the amount of water and nutrients necessary to produce commercial quality tomato fruits and improve yield using these biostimulant products is proven.

In conclusion, the foliar application of CF biostimulant products based on microorganisms of the genus *Trichoderma,* and in particular, *T. harzianum,* improve fruit production in tomato plants grown under stress conditions by reducing the supply of water and salinity and reduce the amount of water and nutrients necessary to produce the same amount of fruit as untreated plants.

### Example 2: Leaf transcriptomics of the experiment described in example 1

Leaf transcriptomics by RNA sequencing has been carried out using leaves of plants grown under irrigation conditions CNT and WS60 subjected to D3 dilution and W-MS, as described in Example 1. RNA was extracted following the TRIzol-chloroform method. Specifically, 50 mg of leaf samples were mixed with TRIzol reagent and centrifuged for 10 min at 4 °C and 12,000 rpm. The supernatants were taken and mixed with chloroform. After 3 min at room temperature, the samples were centrifuged for 15 min at 4 °C and 12,000 rpm. The supernatants were mixed with isopropanol and incubated at room temperature for 10 min. Afterwards, the samples were centrifuged for 10 min at 4 °C and 12,000 rpm. The pellet was recovered and mixed with 75% (V/V) ethanol and then centrifuged for 5 min at 4 °C and 7500 rpm. After removing the supernatant and evaporating the ethanol, the samples were resuspended with water. DNA digestion was performed with TURBOTM DNAse (Thermo Fisher Scientific, Cat. No. AM2238). Then, RNA cleaning was carried out with the phenol:chloroform:NaAc method. Specifically, the samples were mixed with phenol (pH 8) and with chloroform:isoamyl alcohol (24:1). Next, the samples were centrifuged for 10 min at 4 °C and 13,000 rpm. The supernatant was mixed with 3 M sodium acetate and absolute ethanol. After 45 min at -80 °C, the samples were centrifuged for 15 min at 4 °C and 13,000 rpm. The pellet was recovered and 70% (V/V) ethanol was added. After centrifugation for 15 min at 4 °C and 13,000 rpm, the pellet was recovered. After evaporation, the samples were resuspended in water.

Quality control was developed with agarose gel methods, NanoDrop and Qubit. Only samples without signs of degradation in agarose gel, A260/A280 and A260/A230 coefficients > 2 in NanoDrop and concentrations in Qubit above the company's requirements were sent to Genomic Systems, responsible for RNA sequencing. The data obtained were transferred to perform bioinformatics analysis with the Supercomputing and Bioinformatics service of the Bioinnovation Centre, located at the University of Malaga. The quality control of the sequences was performed using FastQC. In this step, several quality metrics were evaluated, such as sequence quality per base, GC content, levels of sequence duplication and overrepresented sequences. Any anomalies detected were addressed to ensure the reliability of subsequent analyses. Fastp and Ribodetector were used to preprocess the readings. Fastp facilitated the trimming of adapters, quality filtering and other preprocessing steps to improve the quality of readings. Ribodetector was used to identify and remove potential ribosomal RNA contaminants that could interfere with subsequent analyses. The reference genome was indexed using BWA, a widely used alignment tool. Next, the readings with the reference genome were mapped using Bowtie2 and Sambamba. This alignment step ensured the exact placement of the readings, allowing subsequent analyses such as expression quantification and differential expression analysis. Expression quantification was carried out with Sam2counts, which consisted of counting the number of readings aligned with each gene. This provided quantitative information on gene expression levels in different experimental conditions or sample groups, thus determining when a gene is overexpressed or its expression is reduced.

Differential expression analysis was performed with DESeq2, a powerful tool for detecting genes that are differentially expressed between conditions. By comparing the expression levels in the different conditions taking into account variability and experimental design, DESeq2 identified genes with statistically significant changes in expression, offering information about the biological processes underlying treatments or experimental conditions. The functional classification of the genes was carried out using the MAPMAN program (https://mapman.gabipd.org/). Thus, a first group of genes was identified whose expression in leaves is altered by the foliar application of the CF biostimulant composition, resulting from the comparison of the transcriptomes between the following groups: WS+CF (plants cultivated under water stress conditions + foliar application of CF biostimulant composition) vs. WS (plants cultivated under water stress conditions), and OI+CF (well-irrigated plants + foliar application of CF biostimulant composition) vs. OI (well-irrigated plants). Based on the comparison carried out between the transcriptomes of both groups, a group of genes is defined, which are referred to as "CF genes", comprising the coincidence of 306 differentially expressed genes (DEGs) and the expression of these genes, regardless of the cultivation conditions of the plant, is altered by the foliar application of the CF biostimulant composition of the invention. Additionally, a list was prepared of the genes potentially involved in the response of the plant cultivated under water stress conditions to the foliar application of the CF biostimulant composition of the invention, resulting from the comparison of the transcriptomes between the following groups:
- WS (plants cultivated under water stress conditions without foliar application of the CF biostimulant composition) vs. OI (well-irrigated plants without foliar application of the CF biostimulant composition), and
- WS+CF (plants cultivated under water stress conditions + foliar application of CF biostimulant composition) vs. WS (plants cultivated under water stress conditions without foliar application of the CF biostimulant composition).

Based on the comparison made between both groups, 687 genes were identified, referred to as "golden genes" that are differentially and inversely expressed in both groups, which demonstrates that the foliar application of the CF biostimulant composition of the invention on stressed plants "reverses" or avoids the alteration of the expression of numerous genes in plants cultivated under water stress conditions.

Of these 687 so-called "golden genes", the genes with SEQ ID No. 1 (DXS2 gene) and SEQ ID No. 2 (HMGR1 gene) are of note. The alteration of the expression of these genes by foliar application of the CF biostimulant composition as defined in the present invention requires the plant to be subjected to water stress.

In conclusion, based on the previous experimental work, it has been deduced that the foliar application on plants suffering from water stress of a CF biostimulant composition comprising a cell-free culture filtrate of one or more fungi of the genus *Trichoderma,* entails a reversal or a significant reduction of the transcriptional differences between a well-irrigated plant and a plant grown under water stress conditions.

Specifically, it has been confirmed that the application of the CF biostimulant composition avoids the reduction of the expression of the genes DXS2 with SEQ. ID. No. 1 and HMGR1, with SEQ.ID.No.2 induced by drought. In other words, the application of the CF biostimulant composition prevents the reduction of the expression of the genes DXS2 with SEQ. ID. No. 1 and HMGR1, with SEQ.ID.No.2 induced by drought, thus avoiding the reduction of plastid activity and the cytosolic pathway of isoprenoid production.

### References:

₁ Lee et al. (2011) Climatic Change. 109, pages 335-353
₂ Lobell et al. (2011) Science. 333:616-20. doi: 10.1126/science
₃ Du Jardin (2015) Sci. Hortic. 196, 3-14. doi: 10.1016/j.scienta.2015.09.021
₄ Berg, G. et al. (2016) J. Exp. Bot. 67: 995-1002. doi: 10.1093/jxb/erv466
₅ Huang, A.C. et al. (2019). Science 10: 364(6440). doi: 10.1126/science.aau6389
₆ Rodríguez, C.E. et al. (2021) Front. Plant Sci. Doi: 10.3389/pfls.2021.775722
₇ Ahmad, M., et al. (2018) Front. Microbiol. 9: 2992. doi:10.3389/fmicb.2018.02992
₈ Castiglione, AM. Et al. (2021) Plants 10:1533. doi:10.3390/plants10081533
₉ Ghorai, AK. et al (2021) Biocontrol Agents and Secondary Metabolites. doi:10.1016/B978-0-12-822919-4.00012-0
₁₀ Illescas, M. et al. (2021) Pathogens 10: 991. doi: 10.3390/pathogens10080991
₁₁ Naamala J and Smith DL (2021) Front. Microbiol. doi: 10.3389/fmicb.2021.634807
₁₂ Mitter et al., (2021) Front. Sustain. Food Syst. 5, 606815. 10.3389/fsufs.2021.606815
₁₃ Naamala and Smith, (2020), Agronomy., doi.org/10.3390/agronomy10081179
₁₄ French et al., (2021), Nat. Plants Mar;7(3):256-267, doi: 10.1038/s41477-020-00830-9.
₁₅ Raimi et al., (2021), Sci. Afr. 11:e00694. doi: 10.1016/j.sciaf.2021.e00694
₁₆ Badri, D.V. et al. (2013). New Phytol. 198: 264-273
₁₇ De-la-Peña, C. and Loyola-Vargas, V.M. (2014) Plant Physiol. 166: 701-419
₁₈ Fiorentino, N. et al. (2018) Front. Plant Sci. doi: 10.3389/fpls.2018.00743
₁₉ Deng, S. et al. (2019) Scientific Rep. 9(1) 17677. doi:10.1038/s41598-019-53623-2
₂₀ Luzieatelli, F. et al. (2019) Front. Plant Sci. doi: 10.3389/fpls.2019.00060
₂₁ Renaut, S. et al. (2019) Microbial Biotechnol. 12: 1346-1358
₂₂ Wang, D. et al. (2019) PLOS ONE, 14(9), e0222048
₂₃ Yandigeri, M.S. et al. (2012) Plant Growth Regul. 68: 411-420
₂₄ Kaur, T. et al. (2019) AMB Expr 9:125. doi: 10.1186/s13568-019-0849-7
₂₅ Baroja-Fernández, E. et al. (2021) Front. Plant Sci. doi: 10.3389/fpls.2021.752653

## Claims

1. A method for improving the crop yield of a plant under abiotic stress conditions comprising:
- growing a plant in a plant substrate in the presence of nutrients; and
- applying an effective amount of a biostimulant composition on the aerial parts of the plant to provide the plant with resistance to abiotic stress, wherein the biostimulant composition comprises a cell-free culture filtrate of one or more fungi of the genus *Trichoderma.*

2. The method according to claim 1, wherein the cell-free culture filtrate of one or more fungi of the genus *Trichoderma* comprises one or more volatile organic compounds emitted to the culture medium by the microorganism(s), wherein the volatile organic compounds are selected from the group comprising: ethanol, 1-propanol, 1-propanol,2-methyl, 1-butanol-3-methyl, 1-butanol,2-methyl, 3-methyl-1-pentanol, 1-butanol,3-methyl-,acetate, 1-butanol,2-methyl-,acetate, 2-heptanol, 2-nonanol, 2-undecanol, benzaldehyde-2-methyl, 2,4-dimethyl-1-heptene, toluene, 2-phenylethyl alcohol, phenol,4-ethyl, 2-acetyl-3methylthiophene, benzene-1,3-bis(1,1-dimethylethyl), 2,5-di-tert-butyl-1,4-benzoquinone, ethyl acetate, acetic acid, propenoic acid ethyl ester, isobutyl acetate, butanoic acid, ethyl ester, butanoic acid, 2-methyl-ethyl ester, 2-pentanone, 2-heptanone, butyrolactone, 2-heptanone-4-methyl, 2-heptanone-4,6-dimethyl, 2-nonanone, (+)- isomenthol, citronellol, citral, cis-beta-farnesene, beta-humulene, alpha-bisabolol, beta-selinene, alpha-gurjunene and alpha-cedrene.

3. The method according to any of the preceding claims, **characterised in that** microorganisms of the genus *Trichoderma* comprise one or more of: *Trichoderma afroharzianum, Trichoderma asperelloides* (strain T203), *Trichoderma asperellum* (strain T-203), *Trichoderma atroviride (strains* IMI 206040, MUCL 45632, *P1), Trichoderma ghanense, Trichoderma hamatum* (strains DIS 219b, GD12), *Trichoderma harzanium* (strains 1295-22, ALL-42, AK20G, CECT2413, GT3-2, NF-9, OTPB3, T-1, T-22, T-39, T-203), Trichoderma longibrachiatum, *Trichoderma parareesei, Trichoderma virens (strains G-6, G-6-5, G-11,* PDBCTVs 12, PDBCTVs 13, T3,Tv29.8, *Δppt1), Trichoderma viridae (strain* T-67, TV 97) and/or *Trichoderma yunnanense.*

4. The method according to any of the preceding claims wherein applying the biostimulant composition on the aerial parts of the plants comprises covering at least 3%, 5%, 10%, 15%, 20%, 30%, 40%, 50%, 60%, 70%, 80%, 90%, 99% or 100% of the total surface of the aerial parts of the plant with the biostimulant composition.

5. The method according to any of the preceding claims wherein the aerial parts of the plant comprise: stem(s), hypocotyls, cotyledons, leaf(ves), flower(s), fruit(s) and/or seed(s).

6. The method according to any of the preceding claims, wherein applying the biostimulant composition on the aerial parts of the plant comprises: watering, sprinkling, spreading, atomising, spraying, pressurised spraying by nozzle, micro-nozzle or nebulisation.

7. The method according to any of the preceding claims, wherein the application of the biostimulant composition on the aerial parts of the plant is carried out 1-4 times a month.

8. The method according to any of the preceding claims, wherein the abiotic stress conditions are selected from the group consisting of: cold temperature, freezing, cooling, heat or high temperature, drought, reduction of irrigation provided or water stress, salinity or high electrical conductivity in soil or irrigation water, high light intensity, low light intensity, ozone, high concentration of heavy metals in the soil and/or irrigation water and any combination thereof.

9. The method according to claim 8, wherein the abiotic stress is a combination of drought and/or salinity.

10. The method according to any of the preceding claims, wherein the plant is selected from the group comprising: wheat, rye, oat, buckwheat, chia, flax, rice, corn, potato, sweet potato, tomato, pepper, eggplant, lettuce, lamb's lettuce, endive, curly endive, rocket, courgette, cucumber, cauliflower, broccoli, cabbage, onion, garlic, carrot, tiger nut, ginger, strawberry, blueberry, raspberry, blackberry, cherry, currant, strawberry tree, artichoke, melon, watermelon, pumpkin, green legumes, chickpea, lentil, bean, bean, soybean, cotton, sunflower, tobacco, oregano, thyme, lavender, alfalfa, basil, mint, parsley, peppermint, peach tree, almond tree, plum tree, nectarine tree, apricot tree, vines, avocado, mango, custard apple, papaya, kiwi, medlars, guava, star fruit, pomegranates, banana tree, mandarin tree, orange tree, lemon tree, lime tree, grapefruit tree, olive tree, walnut tree, hazelnut tree and/or cashew tree.

11. The method according to claim 10, wherein the plant is a tomato plant of the species *Solanum lycopersicum L.*

12. The method according to any of the preceding claims, wherein improving the crop yield of a plant includes: increasing the number of fruits per plant and/or increasing the weight of total fruits per plant and/or increasing the weight and size of the fruits and/or reducing the amount of water and nutrients necessary to obtain the same yield as plants grown under normal conditions.

13. The method according to any of the preceding claims, wherein the biostimulant composition further comprises other additional active compounds selected from the group consisting of: pesticides, plant hormones, insecticides, bactericides, fungicides, antibiotics, proteins, peptides, amino acids, organic acids and/or carbohydrates.

14. The method according to any of the preceding claims, wherein the biostimulant composition further comprises an agriculturally acceptable carrier.

15. The method according to any of the preceding claims wherein the plant or a part thereof grows under field conditions or in a pot in a greenhouse.

16. A method to reverse or avoid alteration of the expression of genes related to primary metabolism of carbohydrates, lipids and amino acids; secondary metabolism; hormone production and signalling; RNA synthesis and processing; protein synthesis, modification and stabilisation; solute and nutrient transport; and the structure of the cell wall in plants, comprising according to claims 1 to 15: growing a plant in a plant substrate in the presence of nutrients; and applying an effective amount of a biostimulant composition or product on the aerial parts of the plant, to provide the plant with resistance to abiotic stress, wherein the biostimulant composition or product comprises a cell-free culture filtrate of one or more fungi of the genus *Trichoderma.*

17. The method according to claim 16, comprising reversing or avoiding the alteration of the expression of the genes DXS2 with SEQ ID. No. 1 and HMGR1 with SEQ ID. No.2.
